(19) Europäisches Patentamt
European Patent Office
Office européen des brevets

(11) **EP 4 657 012 A1**

(12) **EUROPEAN PATENT APPLICATION**
published in accordance with Art. 153(4) EPC

(43) Date of publication:
**03.12.2025 Bulletin 2025/49**

(21) Application number: **23918521.8**

(22) Date of filing: **07.11.2023**

(51) International Patent Classification (IPC):
*G01B 11/08* (2006.01)

(52) Cooperative Patent Classification (CPC):
**G01B 11/08**

(86) International application number:
**PCT/JP2023/040081**

(87) International publication number:
**WO 2024/157566 (02.08.2024 Gazette 2024/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.01.2023 JP 2023010959**

(71) Applicant: **HITACHI HIGH-TECH CORPORATION
Tokyo 105-6409 (JP)**

(72) Inventors:
• **ANZAI, Yumiko
Tokyo 100-8280 (JP)**
• **MINEMURA, Hiroyuki
Tokyo 100-8280 (JP)**

(74) Representative: **Strehl & Partner mbB
Maximilianstrasse 54
80538 München (DE)**

(54) **PARTICLE MEASUREMENT DEVICE, PARTICLE MEASUREMENT METHOD, AND REFLECTIVITY REFERENCE SAMPLE**

(57) An object of the present invention is to provide a technique capable of coping with sensitivity that changes for various reasons when measuring the size of particles contained in a liquid sample using light. A particle measurement device according to the present invention calibrates a size of a particle included in a sample using a reference sample, the reference sample including a reference sample window having the same material quality and thickness as those of a sample container window and including a substance having a reflectivity similar to that of the sample, and calibrates the sample size using the reflectivities of the substance measured at different two time points

*FIG. 9*

**Description**

Technical Field

The present invention relates to a technique for measuring the size of particles contained in a liquid sample.

Background Art

In recent years, pharmaceutical development targets are shifting from low molecular weight drugs to biopharmaceuticals. Biopharmaceuticals are macromolecules and therefore are prone to aggregation, which can lead to toxicity. For example, the U.S. Food and Drug Administration and the like are trying to enforce concentration control regulations of aggregates. Therefore, there is a need for a technique for quantitatively measuring a size distribution of a desired density for aggregates in a submicron region of 0.1 to 1um. Aggregates of proteins float in the solvent and change position over time due to Brownian motion. Hereinafter, in the present invention, techniques for measuring the size and density of protein aggregates and standard particles such as polystyrene beads will be described. These test objects are collectively referred to as "particles".

PTL 1 describes a technique for detecting particles using light measurement. This document discloses 'A light measurement method for condensing light to generate a light spot, and measuring a test object having a size of about three times or less the size of the light spot, the light measurement method comprising: a signal acquisition step of detecting reflected light reflected from the test object by irradiating the test object while moving at least a focal position of the light in an optical axis direction; a step of acquiring correspondence relationship data describing a correspondence relationship between intensity of the reflected light and a size of the test object; and a size calculation step of acquiring the size of the test object by querying the correspondence relationship data using the intensity of the reflected light.' (claim 1). In the technique described in the same document, reflected light and reference light interfere with each other to enhance a signal, so that it is possible to realize high-resolution measurement without requiring preprocessing.

PTL 2 discloses a technique in which an objective lens is physically scanned and interference between signal light and interference light is received by four detectors having different phase conditions, thereby eliminating the need for phase adjustment of reference light by scanning of a mirror in time domain OCT (Optical Coherence Tomography). Furthermore, PTL 2 discloses a technique of speeding up scanning of a light spot so as not to be affected by the movement of particles that perform Brownian motion in a liquid on the basis of the technique of PTL 1.

Citation List

Patent Literature

PTL 1: JP 2017-102032 A
PTL 2: WO2020/144754 A

Summary of Invention

Technical Problem

The technique described in PTLs 1 to 2 measures a particle size by using an interference signal generated by interference between signal light reflected from a particle in a liquid sample and reference light. In actual measurement, a wavelength shift of a semiconductor laser or a variation in laser power may occur due to an environmental temperature change, a temporal change, dust attached to an objective lens, or the like, and thus a detection signal may vary. In order to suppress this, sensitivity calibration is performed using standard beads having a known particle size.

However, this calibration procedure requires time and effort such as preparation of standard beads. In addition, due to the difference between the light reflectivity from the standard bead and the light reflectivity from the particle, it is necessary to change the laser power between when the standard bead is irradiated with the laser and when the particle is irradiated with the laser. Accordingly, the sensitivity coefficient may be different between the two.

The present invention has been made in view of the above problems, and an object of the present invention is to provide a technique capable of handling sensitivity that changes for various reasons when measuring the size of particles contained in a liquid sample using light.

Solution to Problem

A particle measurement device according to the present invention calibrates a size of a particle included in a sample using a reference sample, the reference sample including a reference sample window having the same material quality and thickness as those of a sample container window, the reference sample also including a substance having a reflectivity similar to that of the sample. The particle measurement device calibrates the sample size using the reflectivities of the substance measured at different two time points.

Advantageous Effects of Invention

According to the particle measurement method according to the present invention, it is possible to cope with sensitivity that changes for various reasons when measuring the size of particles contained in a liquid sample using light. Problems, configurations, and effects other than those described above will be clarified by the following description of embodiments.

Brief Description of Drawings

[FIG. 1] FIG. 1 is a schematic diagram illustrating a relationship between a particle size and a magnitude of a reflected light amount in PTL 1 and PTL 2.
[FIG. 2] FIG. 2 is a configuration diagram of a particle measurement device according to a first embodiment.
[FIG. 3A] FIG. 3A is a diagram illustrating a frame and a metal plate on which a reflectivity reference sample is disposed.
[FIG. 3B] FIG. 3B is a diagram illustrating the frame and the metal plate on which the reflectivity reference sample is disposed.
[FIG. 4] FIG. 4 is a side sectional view illustrating the reflectivity reference sample 303 and a focal position.
[FIG. 5A] FIG. 5A is a schematic diagram showing a method of quantifying sensitivity correction.
[FIG. 5B] FIG. 5B is a schematic diagram showing the method of quantifying sensitivity correction.
[FIG. 6] FIG. 6 is a diagram illustrating an example of a measurement flow of $A_0$.
[FIG. 7] FIG. 7 is a diagram illustrating an example of a measurement flow of $A_1$.
[FIG. 8] FIG. 8 is a diagram illustrating another example of the measurement flow of $A_1$.
[FIG. 9] FIG. 9 is a diagram illustrating an example of a measurement flow of measuring $A_1$ and then subsequently measuring an actual sample.
[FIG. 10] FIG. 10 is a diagram illustrating arrangement of the reflectivity reference sample 303.
[FIG. 11A] FIG. 11A is a calculation result showing a specification of a thickness variation of a transparent flat plate 402 for implementing sensitivity calibration and realizing highly accurate size measurement.
[FIG. 11B] FIG. 11B shows a calculation result of the relationship between the refractive index of the transparent flat plate 402 and the Strehl intensity similarly to FIG. 11A.
[FIG. 12] FIG. 12 is a schematic diagram illustrating ID information of the reflectivity reference sample 303.
[FIG. 13] FIG. 13 is a diagram illustrating an example of a measurement flow for reproducing ID information.
[FIG. 14A] FIG. 14A is a schematic diagram illustrating a relationship between a container containing an actual sample containing particles to be measured and a solvent and a focal position of laser light when a solvent refractive index of the actual sample is measured.
[FIG. 14B] FIG. 14B illustrates a state in which the focal position is moved to a predetermined position in the sample and the size of the particle contained in the sample is measured, following FIG. 14A.
[FIG. 15A] FIG. 15A shows reflectivity of a reflectivity reference sample 303 in a second embodiment of the present invention.
[FIG. 15B] FIG. 15B shows reflectivity in another configuration example of the reflectivity reference sample 303 of the second embodiment.
[FIG. 16] FIG. 16 illustrates another configuration example of the reflectivity reference sample 303.

Description of Embodiments

<Problems of Prior Art>

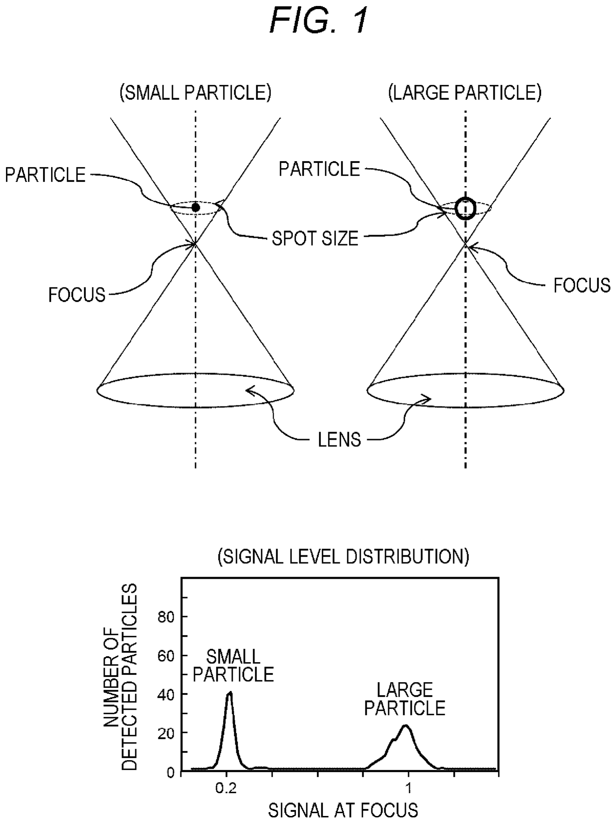

FIG. 1 is a schematic diagram illustrating a relationship between a particle size and a magnitude of a reflected light amount in PTL 1 and PTL 2. The techniques of PTL 1 and PTL 2 utilize interference between reflected signal light from a particle and reference light in order to measure the size of the particle dispersed in a solvent. The detected reflected light changes in accordance with the size of the particle and its refractive index. In the techniques described in PTL 1 and PTL 2, it is possible to obtain a detection signal by converting an electric field amplitude of reflected light into a voltage using interference of light. At this time, the magnitude $E_{sig}$ of the detection signal can be expressed by the following equation when the coherence length of the light source is sufficiently long from Fresnel's law using the refractive index $n_p$ of the particle and the refractive index $n_m$ of the solvent. S is an electric field amplitude of the light with which the sample is irradiated, R is an electric field amplitude of the reference light, $\sigma$ is a coefficient corresponding to the size of the particle described above, and $\eta$ is a constant indicating interference efficiency between the reflected light and the reference light and efficiency of high electric conversion of the photodetector.

[Math. 1]

$$E_{sig} = \eta\sigma|S||R|\frac{|n_p - n_m|}{|n_p + n_m|}$$

(Equation 1)

The particle size can be measured by measuring the detection signal expressed by Equation 1. In actual measurement, a wavelength shift of a semiconductor laser and a variation in laser power occur due to an environmental temperature change, a temporal change, dust attached to an objective lens, or the like, and thus a detection signal may vary. In order to suppress this, the sensitivity calibration is performed by the following procedure.

(1) A standard sample is prepared by diluting polystyrene standard beads having a known particle size with pure water to an appropriate concentration.
(2) A standard sample is measured immediately before measurement of a sample to be actually measured.
(3) From the measurement result of the standard sample, a sensitivity correction coefficient that eliminates a difference between the measured size and the true size is obtained, and the value of the coefficient is manually input.

The calibration procedure above requires complicated labor and enormous time for preparation of standard beads, accurate dilution, measurement, and the like, and has a problem from the viewpoint of user convenience. In addition, there is a problem that the size may vary depending on the lot of standard beads, and the beads may be lost during bead dilution stirring, so that accurate measurement may not be performed. Furthermore, standard beads made of polystyrene have a large difference in refractive index from pure water as a solvent, and thus have a large reflectivity, and the measurement laser power needs to be set relatively low. On the other hand, for example, in the case of measuring protein particles, since the difference in refractive index between the protein particles and the solvent is small, the reflectivity is small, and the measurement laser power needs to be set relatively high. There is a possibility that a difference in laser temperature occurs due to a difference in laser power between the two, which may lead to a difference of the laser wavelengths between the two. The shift in wavelength may cause a difference in sensitivity coefficient between the two, which is a problem in accurate sensitivity correction.

<Basic Principle of Present Invention>

(Sensitivity Quantification)

In order to solve the above problems, the present invention performs sensitivity calibration using a reflectivity reference sample having a plane having a reflection signal equivalent to signal light obtained from a particle to be measured. Specifically, the particles are measured by the following equation obtained by introducing the sensitivity coefficient K into Equation 1.

[Math. 2]

$$E_{sig} = K \times \eta\sigma|S||R|\frac{|n_p - n_m|}{|n_p + n_m|}$$

(Equation 2)

The sensitivity coefficient K is defined by the following equation. $A_0$ is the reflectivity of the reflectivity reference sample measured at the time of shipment of the particle measurement device of the present invention. $A_1$ is the reflectivity when the reflectivity reference sample is measured immediately before the measurement of the sample to be actually measured.

[Math. 3]

$$K = \frac{A_1}{A_0}$$

(Equation 3)

If this reflectivity reference sample is measured for each particle measurement or for each predetermined condition, the sensitivity can be corrected by a simpler method using the sensitivity coefficient K.

(Reference sample)

The reflectivity reference sample has a glass window having the same material quality and the same thickness as the glass window of the light incident surface of the sample container for measuring particles. The reflectivity reference sample also has a structure in which a substance having a reflectivity substantially equal to the reflectivity of the measurement sample is formed on the boundary surface in contact with the glass window. As a result, the measurement conditions of the reflectivity reference sample and the measurement sample can be the same. In particular, by making the laser power at the time of sample measurement and the laser power at the time of reference sample measurement the same, the interference efficiency between the reflected light and the reference light can be made the same, so that more accurate sensitivity correction can be performed.

As an example of the reflectivity reference sample, a resin having a refractive index of $1.47 \pm 0.03$ is formed in contact with a transparent flat plate. As a result, the difference in refractive index between the transparent flat plate and the resin is about the same as the difference in refractive index between the protein particles and the solvent, and the reflectivity of the reflectivity reference sample and the reflectivity of the protein particles in the solvent are substantially equal. Therefore, the example can be used as a reflectivity reference sample for protein particle measurement. The term "substantially equal" as used herein means that the error of the measurement result falls within an allowable range. In other words, it is necessary that a difference between the reflectivity of the substance (resin in this case) in contact with the transparent flat plate and the reflectivity of the sample falls within an allowable range from the viewpoint of a measurement error.

As another example of the reflectivity reference sample, a dielectric film is formed in contact with a transparent flat plate as described later. When the measurement target particle is a metal particle, the reflectivity of the metal particle in the solvent can vary from 0.01% to several% depending on the material, material quality, and the like. By selecting the material and the film thickness of the dielectric film and the material and the film thickness of the metal film formed on the dielectric film, it is possible to design the sample to have a predetermined reflectivity and to cope with various particles.

<First Embodiment>

Hereinafter, in the description of the embodiment of the present invention, as described in the figures, the description will be made while being unified to a coordinate system in which the optical axis direction is the z axis. In addition, the size of the particle to be measured is treated as the diameter of a sphere having the same volume as the particle.

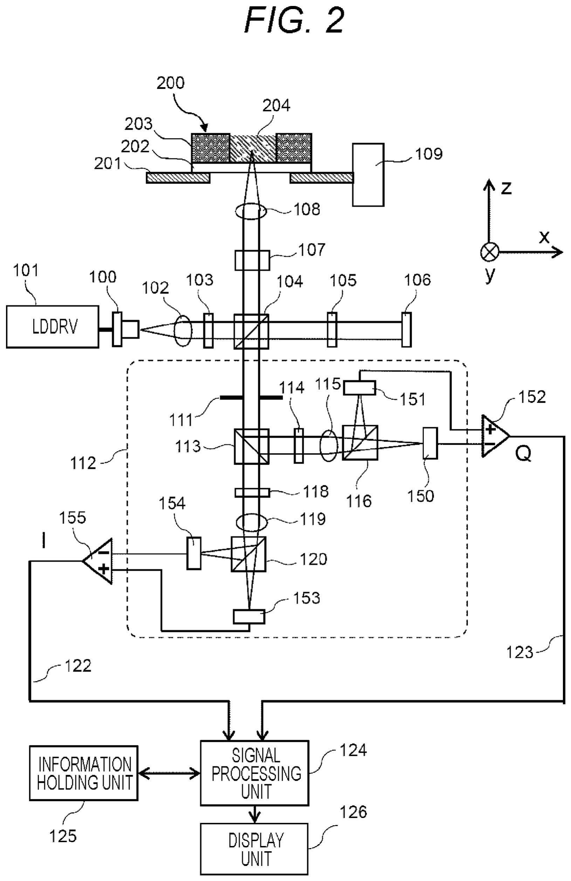

FIG. 2 is a configuration diagram of a particle measurement device according to a first embodiment of the present invention. Laser light emitted from a light source 100, whose light emission state is controlled by a laser driver 101 that performs radio frequency superimposition and emission power control, is converted into parallel light by a collimator lens 102. The polarization orientation of the laser light is adjusted by a λ/2 plate 103 whose optical axis is set to about 22.5 degrees with respect to the horizontal direction, and then the light is separated into signal light and reference light by a polarization beam splitter 104.

The reference light is converted into a circularly polarized state by a λ/4 plate 105, is then reflected by a reference light mirror 106, is in a polarized state in which the polarization in the outward path is rotated by 90 degrees by the λ/4 plate 105, and is reflected by the polarization beam splitter 104. After the traveling direction of the signal light is deflected by a composite deflection element 107 in the XY directions, the signal light is converted into a circularly polarized state by the action of the built-in λ/4 plate, and is focused in a sample 204 by an objective lens 108.

A drive mechanism 109 that moves the sample in the Z-axis direction has a function of scanning the focal position of the signal light along the Z-axis direction (optical axis direction). The component of the signal light reflected from the sample 204 is deflected in the same direction as the forward path by the composite deflection element 107 in the XY direction, and is in a circular polarization state by the action of the built-in $\lambda/4$ plate and in a polarization state in which the polarization is rotated by 90 degrees in the forward path, and is transmitted through the polarization beam splitter 104.

A sample container 200 holds the sample 204 in the well and directs signal light into the sample via a transparent window 202. Reference numeral 203 denotes a resin member that forms the well of the sample container. A metal plate 201 contacts the transparent window 202 to mechanically hold the sample container 200 and to stabilize the temperature of the sample.

The signal light and the reference light are multiplexed by the polarization beam splitter 104, guided to a detection optical system 112, and split into transmitted light and reflected light by a half beam splitter 113 via a pinhole 111.

After passing through a $\lambda/4$ plate 114 whose optical axis is set to about 45 degrees with respect to the horizontal direction, the reflected light is condensed by a condensing lens 115, is branched into two by a polarization beam splitter 116, is photoelectrically converted by photodetectors 150 and 151, is differentially amplified by a current differential amplifier 152, and becomes a detection signal 123.

After passing through a $\lambda/2$ plate 118 whose optical axis is set to about 22.5 degrees with respect to the horizontal direction, the transmitted light is condensed by a condensing lens 119, is branched into two by a polarization beam splitter 120, is photoelectrically converted by photodetectors 153 and 154, is differentially amplified by a current differential amplifier 155, and becomes a detection signal 122.

The detection optical system 112 constitutes a homodyne phase diversity method, and the detection signals 122 and 123 are processed by a signal processing unit 124. The signal processing unit 124 (processing unit) performs sensitivity correction on the basis of the information held in an information holding unit 125, and displays a calculation result including the correction on a display unit 126 to present the calculation result to a user. The information held in the information holding unit 125 and the sensitivity correction based on the information will be described later.

(Measurement of Reflectivity of Boundary Surface)

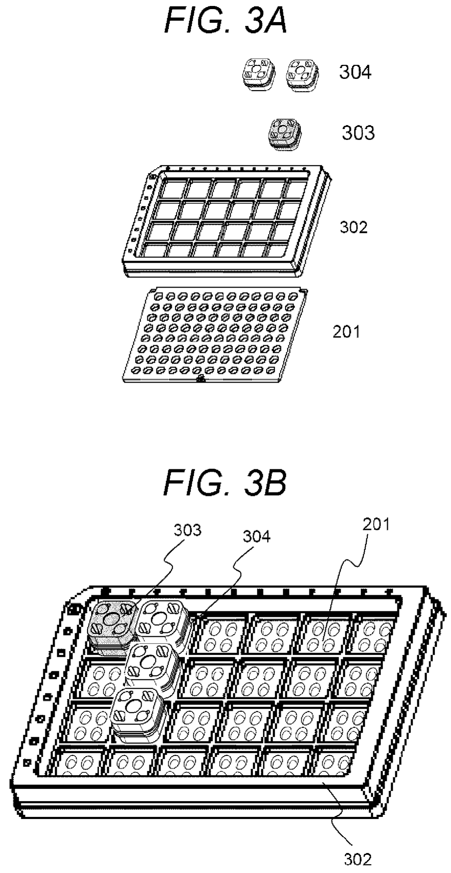

FIGS. 3A and 3B are diagrams illustrating a frame and a metal plate on which a reflectivity reference sample is disposed. In the figure, a reflectivity reference sample 303 is inserted into a frame 302 and arranged so as to be in contact with the surface of the metal plate 201. At this time, the reflectivity reference sample 303 may be disposed on the frame 302 together with other sample containers 304. When the reflectivity reference sample 303 is arranged on the frame 302 together with the other sample containers 304, both can be collectively measured in a series of flows.

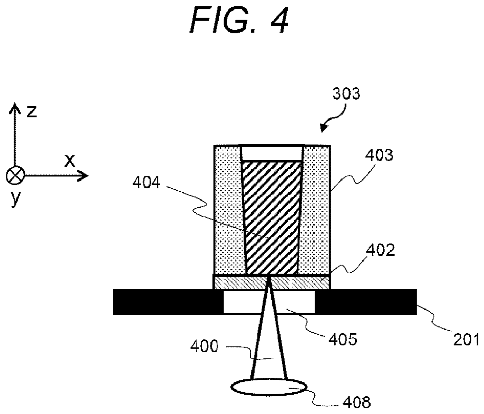

FIG. 4 is a side sectional view illustrating the reflectivity reference sample 303 and a focal position. The reflectivity reference sample 303 includes a transparent flat plate 402, a container 403, and a substance 404 in contact with the transparent flat plate 402, and is disposed in contact with the metal plate 201. Light 400 condensed by the objective lens 108 passes through a window 405 for measurement and is applied to the boundary surface between the transparent flat plate 402 and the substance 404. By adjusting the relative position between the boundary surface and the objective lens 108, the focal position of the objective lens 108 and the boundary surface are matched with each other, and the reflectivity from the boundary surface is acquired. Furthermore, the position of the reference light mirror 106 is adjusted, and the optical path length is adjusted so that the reflectivity from the boundary surface is maximized.

(Sensitivity Quantification)

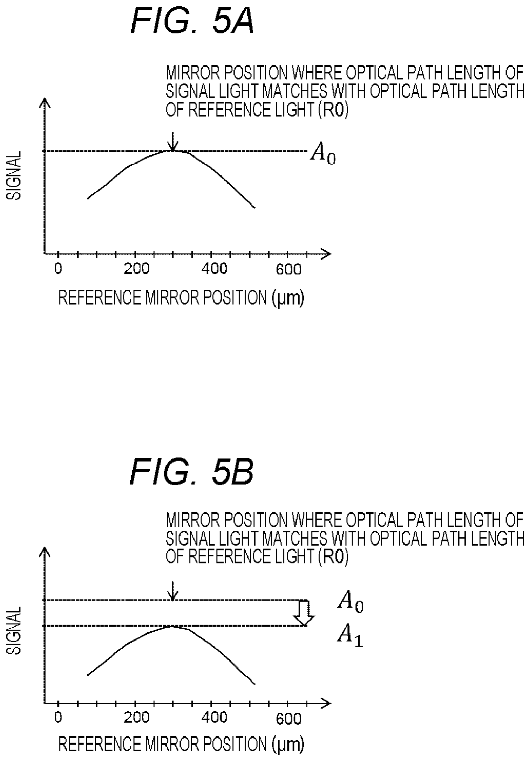

FIGS. 5A and 5B are schematic diagrams showing a method for quantifying sensitivity correction. First, the reflectivity ($A_0$) from the boundary surface between the transparent flat plate 402 of the reflectivity reference sample 303 provided in the device and the substance 404 in contact with the transparent flat plate 402 is measured at the time of device shipment by the above method, and the information is held in the information holding unit 125. Next, at the time of measuring the actual sample, similarly, the reflectivity ($A_1$) from the boundary surface between the transparent flat plate 402 of the reflectivity reference sample 303 and the substance 404 in contact with the transparent flat plate 402 is measured, and the information is held in the information holding unit 125. The sensitivity coefficient K can be obtained from the values of $A_0$ and $A_1$, and the detection signal can be corrected by Equation 2.

FIG. 5 shows a case where $A_0 > A_1$. As a factor that causes such a case, a wavelength shift of a semiconductor laser due to an environmental temperature change or a change with time, a change in laser power, dust attached to an optical element including an objective lens, a change with time of the optical element itself, or the like may cause a change in optical characteristics and a decrease in an output signal. By using the above-described method of quantifying sensitivity correction, it is possible to extremely reduce the influence of these factors on the measurement result.

(Measurement Flow)

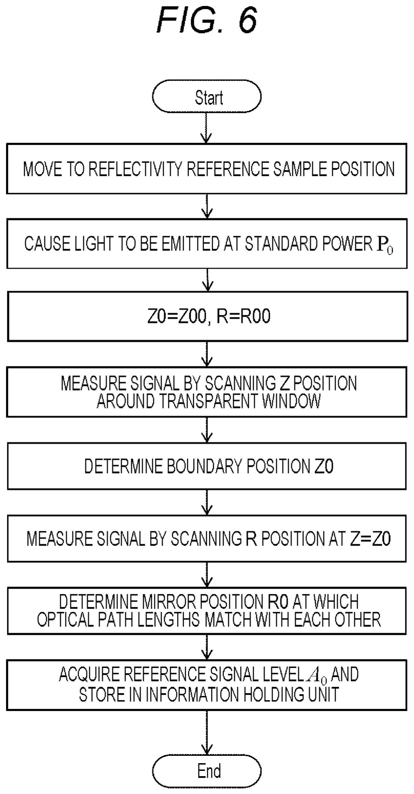

FIG. 6 is a diagram illustrating an example of a measurement flow of $A_0$. This flowchart can be performed by the signal processing unit 124. The same applies to the following flowcharts. The condensing position of the signal light is moved to the planar position of the reflectivity reference sample 303, and the light source 100 is caused to emit light at the standard power $P_0$. The Z-axis direction position Z0 of the boundary surface and the position R of the reference light mirror 106 are initialized. Z0 is determined by measuring a signal while scanning Z0 around the transparent window 405. By measuring the signal while scanning R at the determined Z0, the mirror position R0 at which the optical path lengths of the signal light and the reference light match with each other is determined. The signal level obtained at this time point is stored in the information holding unit 125 as $A_0$.

Since $A_0$ and $A_1$ are measured using the same light emission power, standard power is used here. The use of the standard power is intended to prevent the signal level of the measurement result from being saturated. Under the condition that the non-saturated signal level is obtained, it is necessary that the reflectivity of the sample and the reflectivity of the reflectivity reference sample 303 are substantially the same (the difference between them is within an allowable range from the viewpoint of measurement accuracy).

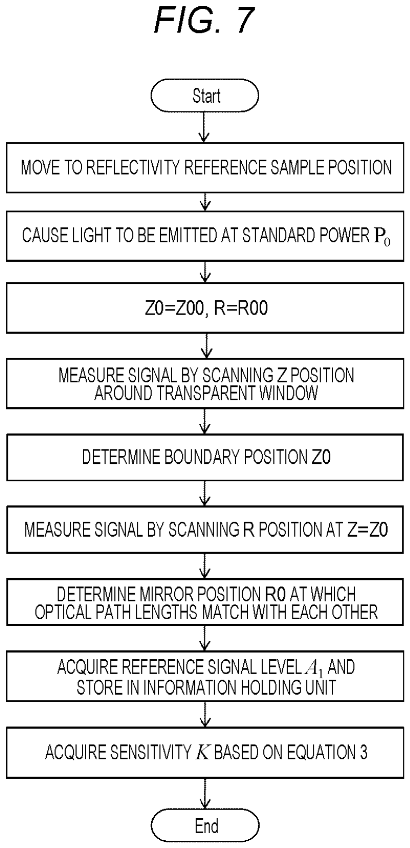

FIG. 7 is a diagram illustrating an example of a measurement flow of $A_1$. $A_1$ can also be measured similarly to that in FIG. 6. The signal processing unit 124 calculates the sensitivity coefficient K from $A_0$ and $A_1$ obtained in FIGS. 6 and 7.

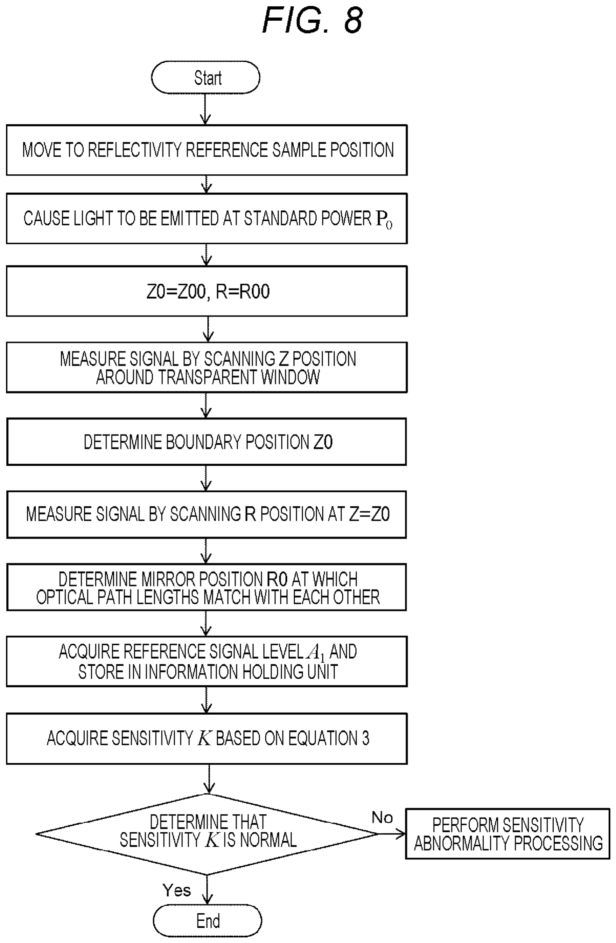

FIG. 8 is a diagram illustrating another example of the measurement flow of $A_1$. In addition to the flow of FIG. 7, a predetermined value is set to the sensitivity coefficient K, and the sensitivity abnormality processing can be executed when the sensitivity coefficient K obtained from $A_0$ and $A_1$ falls outside the predetermined value range. For example, the signal processing unit 124 can notify the user of the fact by outputting a signal or a message indicating that the sensitivity coefficient K is out of the predetermined range.

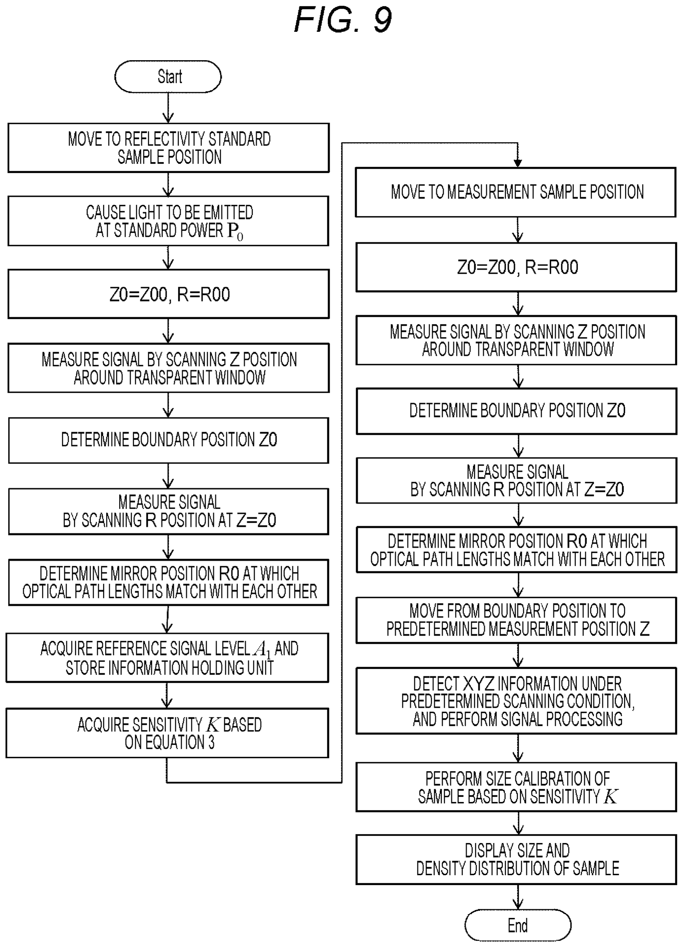

FIG. 9 is a diagram illustrating an example of a measurement flow of measuring $A_1$ and then measuring an actual sample. When the actual sample is measured, Z0 and R0 can be determined similarly to the reflectivity reference sample. The focal position is moved from Z0 to a predetermined measurement position Z, and the detection signal is processed while the focus is scanned according to a predetermined scanning condition. The measurement result of the actual sample is calibrated on the basis of the sensitivity coefficient K. By the above processing, the particle size and the density distribution of the actual sample are calculated, and the result is displayed on the display unit 126.

(Arrangement of Reflectivity Reference Sample)

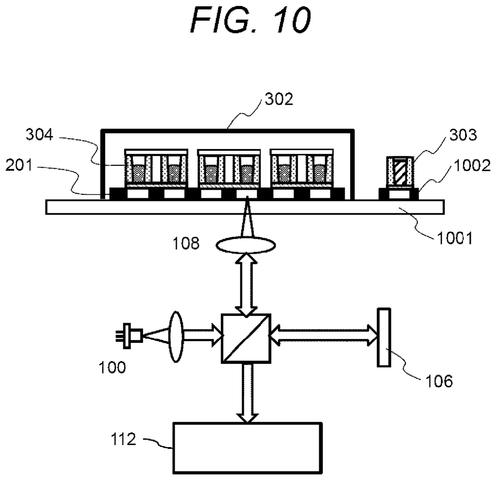

FIG. 10 is a diagram illustrating arrangement of the reflectivity reference sample 303. In FIG. 3, an example in which the reflectivity reference sample 303 is arranged in the frame 302 together with the other sample containers 304 is illustrated, but the reflectivity reference sample 303 may be arranged at other positions. For example, the reflectivity reference sample 303 having the structure illustrated in FIG. 4 can be placed on a portion of a sample stage 1001 larger than the metal plate 201 holding the metal plate 201. At this time, the reflectivity reference sample 303 can be disposed outside the frame 302 so as to be in contact with the metal plate 1002 different from the metal plate 201. The different metal plate 1002 may be different from the metal plate 201, or may be integrated with the metal plate 201.

When the reflectivity reference sample 303 is arranged outside the frame 302, samples to be measured can be arranged at all positions in the frame 302, so that the number of samples that can be measured can be maximized. Furthermore, with this arrangement, the reflectivity reference sample 303 arranged outside the frame 302 can be configured not to be removed by the user. As a result, it is possible to avoid human errors such as forgetting to arrange the reflectivity reference sample 303 and making a mistake in arrangement position. For example, it is conceivable to place the reflectivity reference sample 303 in a place where the user cannot see. The reflectivity reference sample 303 may be configured to be detachable or may be fixedly attached.

(Thickness of Transparent Flat Plate)

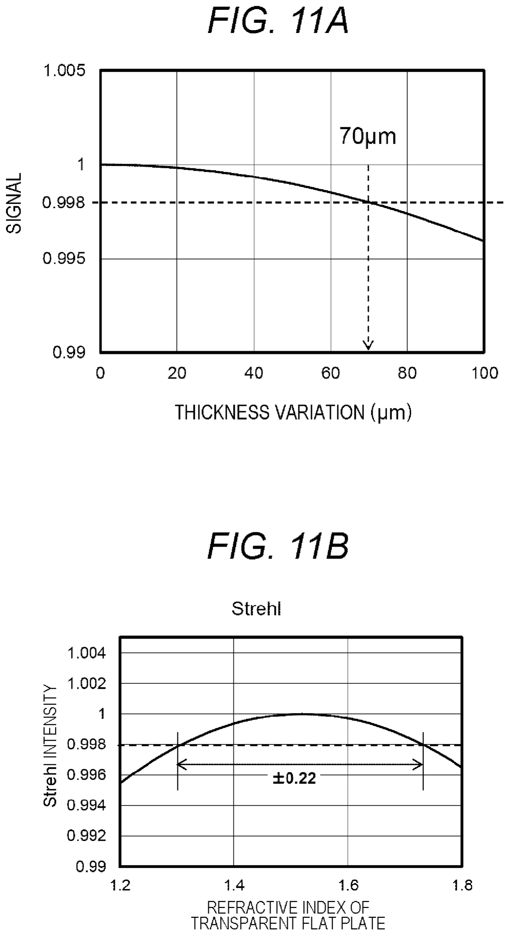

FIG. 11A is a calculation result showing a specification of a thickness variation of the transparent flat plate 402 for implementing sensitivity calibration and realizing highly accurate size measurement. In order to measure the particle size distribution with high accuracy, similarly to the configuration specification of the sample container, it is necessary to satisfy a predetermined specification also in the configuration of the reflectivity reference sample 303. As is well known, when the thickness of the transparent flat plate 402 deviates from a predetermined value, spherical aberration occurs optically. The influence on the detection signal can be treated as a decrease in the Strehl intensity based on the wavefront aberration. How the detection signal (Strehl intensity) is lowered due to the deviation of the thickness of the transparent flat plate 402 is calculated. Here, a result in a case where a semiconductor laser having a wavelength of 785 nm is used as the light source 100, a microscope lens having a numerical aperture of 0.45 is used as the objective lens 108, and borosilicate glass (refractive index measured value=1.520) having a thickness of 175 $\mu$m is used as the transparent flat plate 402 is shown. As can be seen from the figure, in order to set the decrease amount of the detection signal to 0.2% or less, the variation in the thickness of the transparent flat plate 402 is required to be 70 $\mu$m or less.

FIG. 11B shows a calculation result of the relationship between the refractive index of the transparent flat plate 402 and the Strehl intensity similarly to FIG. 11A. As can be seen in the figure, the allowable range of the refractive index of the transparent flat plate 402 is $\pm 0.22$.

As an example of the present invention, the reflectivity reference sample 303 illustrated in FIG. 4 and FIGS. 12 and 16 described later cannot acquire accurate sensitivity unless it is optically compatible with the sample container 304 illustrated in FIG. 3. Specifically, the transparent flat plate 402 formed at the bottom should have a thickness of $175 \pm 70$ μm and a refractive index of $1.520 \pm 0.22$. As a material quality of the transparent flat plate 402 that can satisfy this requirement, a borosilicate glass substrate having optical quality can be used.

(ID Information)

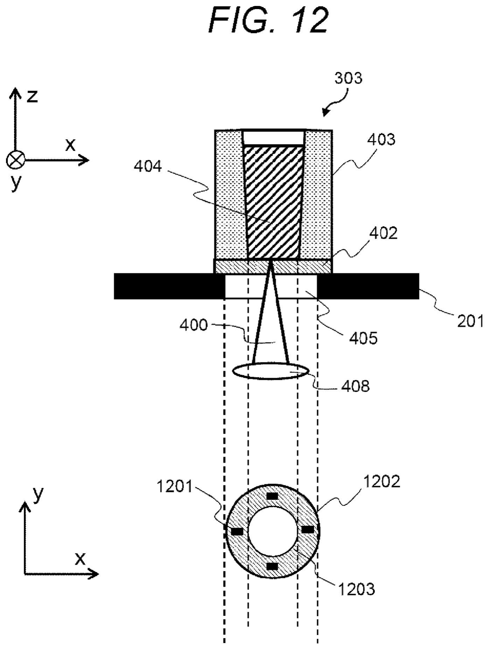

FIG. 12 is a schematic diagram illustrating ID information of the reflectivity reference sample 303. The reflectivity reference sample 303 can have ID information. Specifically, information corresponding to the reflectivity of the reflectivity reference sample 303 is recorded in an optically identifiable form such as a barcode in a place outside a container opening 1203 in the surface of the transparent flat plate 402 on the side in contact with the metal plate 201 and in an inside 1202 of the transparent window 405. The information corresponding to the reflectivity may be a value of the reflectivity itself or a level of the value (high, medium, low, or the like). Furthermore, a symbol or information associated with a reflectivity value or level may be used. The recording method can be performed by a known method such as printing or engraving.

The ID information 1201 can be reproduced by focusing the laser light on the surface of the transparent flat plate 402 on the side in contact with the metal plate 201 and scanning in the xy direction of the figure. By performing the reproduction of the ID information before the measurement of the reflectivity reference sample 303, it is possible to reliably recognize that the sample is the reflectivity reference sample, and thus, it is possible to avoid a human error such as mix-up of the reference sample.

As the ID information, it is also possible to record other information of information corresponding to the reflectivity. For example, the other information includes predetermined specific identification information or a serial number of a reference sample. This makes it possible to ensure the quality of the reference sample.

The surface of the transparent flat plate 402 on which the ID is recorded may not be the surface on the side in contact with the metal plate 201. The reflectivity reference sample 303 may be manufactured by forming ID information on the transparent flat plate 402 in advance and bonding the transparent flat plate 402 with the surface on which the ID information is formed facing the container side. Also in this case, the ID information is formed inside the transparent window 405 and outside the container opening 1203.

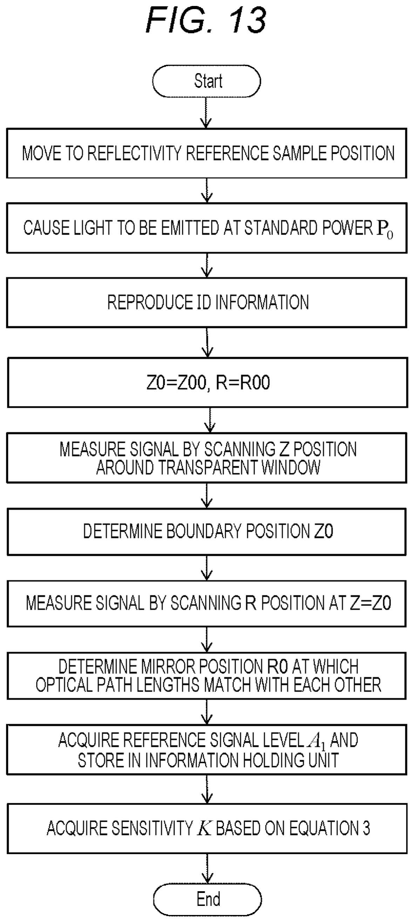

FIG. 13 is a diagram illustrating an example of a measurement flow for reproducing ID information. The ID information can be reproduced before $A_0$ or $A_1$ is measured. Here, an example in which reproduction is performed when $A_1$ is measured has been described. For example, the ID information can be reproduced before the boundary surface position Z0 and the mirror position R are scanned.

The ID information can be used to pre-check whether the correct reflectivity reference sample 303 is used. Since the light emission power is determined in advance for each sample type, when the light emission power is determined, the sample type corresponding thereto is also determined. Therefore, it is desirable to perform a step of reproducing the ID information after determining the light emission power and before measuring the reflectivity.

(Machine Difference, etc.)

By using the reflectivity reference sample 303, it is possible to obtain substantially the same result for the same sample even if there is a machine difference (minute differences in laser wavelength, optical system, detector sensitivity, etc.) in the particle measurement device. Furthermore, it can also be used for failure diagnosis of the device. Specifically, in a case where the sensitivity coefficient K deviates from a certain numerical range, deterioration due to aging of the laser, adhesion of dust or the like to the optical element, deviation of the optical system, and the like are conceivable. Therefore, the signal processing unit 124 can issue an alert on the display unit 126, for example, to encourage device maintenance and repair.

(Measurement of Solvent Refractive Index)

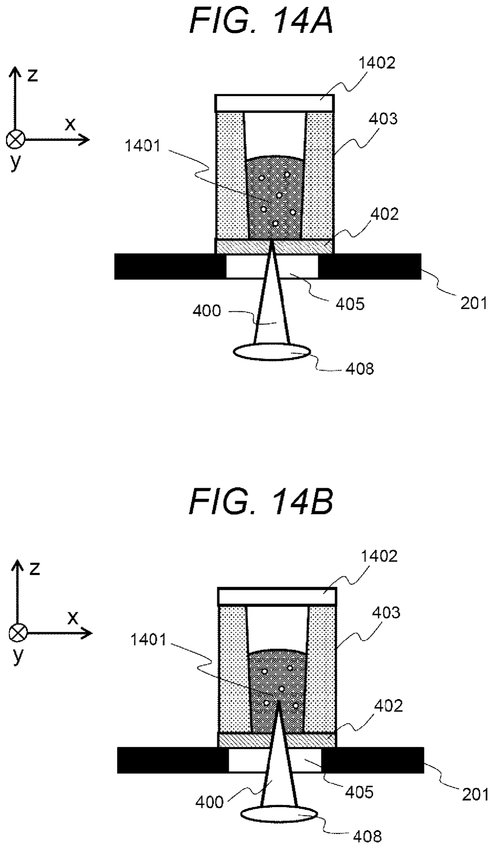

FIG. 14A is a schematic diagram illustrating a relationship between a container containing an actual sample containing particles to be measured and a solvent and a focal position of laser light when a solvent refractive index of the actual sample is measured. The reflectivity reference sample 303 can also be used for measuring the refractive index of the solvent of the actual sample. In the figure, reference numeral 1401 denotes a sample, and reference numeral 1402 denotes a sealing tape. In order to measure the refractive index of the solvent, the present invention utilizes the fact that the reflectivity of the boundary between the transparent flat plate 402 and the sample depends on the refractive index of the solvent. The focal point of the objective lens 108 can be positioned at the boundary between the sample 1401 and the transparent flat plate 402 by setting the condition that the detection signal is maximized while moving the sample stage (not illustrated) in the Z direction. At this time, from the Equation of Fresnel, the magnitude of the detection signal can be expressed by Equation 1.

In the present invention, by selecting the material quality of the transparent flat plate 402, the refractive index thereof can be used as a prescribed value. Similarly, the electric field amplitude S of the light applied to the sample and the electric field amplitude R of the reference light can be treated as constant values by making the emission power condition of the semiconductor laser (not illustrated) constant.

Furthermore, the magnitude of the detection signal is measured in a case where a substance having a refractive index $n_o$ is used as a sample as a substance in contact with the interface of the reflectivity reference sample 303, and the measured value is set as $E0_{sig}$. $E0_{sig}$ is expressed by Equation 4. Equation 5 is derived from Equations 1 and 4. In Equation 5, since a value other than the refractive index $n_m$ of the solvent is a known value or a measured value, it is possible to measure the refractive index $n_m$ of the solvent using Equation 5.

[Math. 4]

$$E0_{sig} = \eta |S||R| \frac{|n_g - n_o|}{|n_g + n_o|}$$

(Equation 4)

[Math. 5]

$$\frac{|E_{sig}|}{|E0_{sig}|} = \frac{|n_g - n_m| \times |n_g + n_o|}{|n_g - n_o| \times |n_g + n_m|}$$

(Equation 5)

FIG. 14B illustrates a state in which the focal position is moved to a predetermined position in the sample and the size of the particle contained in the sample is measured, following FIG. 14A.

<Second Embodiment>

(Refractive Index: Dielectric Film)

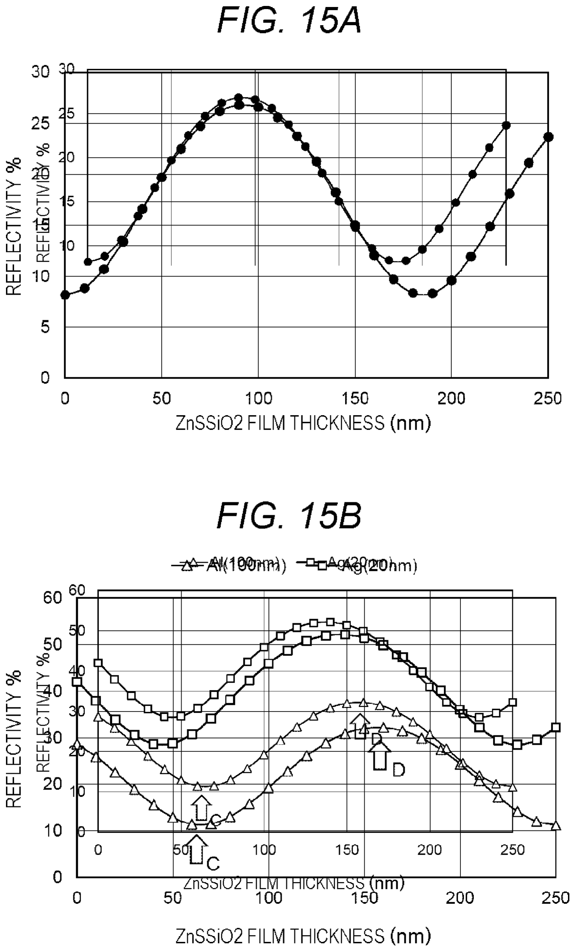

FIG. 15A shows reflectivity of a reflectivity reference sample 303 in a second embodiment of the present invention. In the second embodiment, a dielectric film is used as a substance in contact with a transparent flat plate 402 of the reflectivity reference sample 303 in FIG. 4. $ZnSSiO_2$ is used as a dielectric film, and the dielectric film is formed on the transparent flat plate 402 made of borosilicate glass having a refractive index of 1.52 by sputtering. The reflectivity of the reflectivity reference sample on which the dielectric film is formed changes according to the film thickness of the dielectric film due to interference between reflection from the surface of the dielectric film on the laser light incident side and reflection from the surface on the back side. FIG. 15A shows the relationship between the film thickness and the reflectivity of $ZnSSiO_2$ used in the second embodiment.

FIG. 15B shows reflectivity in another configuration example of the reflectivity reference sample 303 of the second embodiment. In this configuration example, Al100nm and Ag20nm are further formed as metal films by sputtering on the dielectric film $ZnSSiO_2$ formed on the transparent flat plate 402. The reflectivity of the reflectivity reference sample 303 having this structure changes as illustrated in FIG. 15B with respect to the film thickness of the dielectric film $ZnSSiO_2$.

As described above, the reflectivity of the reflectivity reference sample 303 can be set to a predetermined value by appropriately selecting, as the reflectivity reference sample 303, any one of (a) a multilayer structure including a single dielectric film or two or more kinds of dielectric films, or (b) a structure in which a dielectric film and a metal film are laminated in order, and by appropriately selecting each film thickness. In the vicinity of C and D shown in FIG. 15B, it means that the margin is wide with respect to the film thickness variation. When this point is used in film design corresponding to a predetermined reflectivity value, a margin for production such as a film formation rate is widened, which is preferable.

In a case where the measurement target particle has a size equal to or larger than the light spot size, or in a case where the measurement target particle is a metal particle, the reflectivity increases depending on the material, material quality, or the like. In that case, by selecting the material and film thickness of the dielectric film and the material and film thickness of the metal film, a configuration corresponding to the target particle reflectivity may be obtained.

<Third Embodiment>

In a third embodiment of the present invention, a specific example of the reflectivity reference sample 303 will be described. The configuration and measurement procedure of the particle measurement device are similar to those of the first and second embodiments.

(Reflectivity Reference Sample 1)

As a substance in contact with the transparent flat plate 402 of the reflectivity reference sample 303 in FIG. 4, an ultraviolet curable resin (DVD310) manufactured by Nippon Kayaku Co., Ltd. is used. When bubbles are mixed in the boundary surface, the reflectivity signal is affected. In order to avoid this, the ultraviolet curable resin is placed in a vacuum container and vacuum-exhausted for 10 minutes to perform defoaming processing. Thereafter, a resin is injected into the container 403, and the resin is cured by being irradiated with ultraviolet rays at about 300 mJ/cm$^2$ by an ultraviolet irradiation device (ECS-201G1) manufactured by Eye Graphics Co., Ltd.

(Refractive Index: for Protein)

The reflectivity from the boundary surface is proportional to the difference in refractive index of the two substances. For example, when protein particles are used as a sample for measuring the size distribution, the difference in refractive index between the solvent and the protein particles is about 0.06. In the reflectivity reference sample using the ultraviolet curable resin, the refractive index after curing of the ultraviolet curable resin DVD310 is 1.50, and when borosilicate glass having a refractive index of 1.52 is used for the transparent flat plate, the difference in refractive index between the two is 0.02. Therefore, the reflectivity from the protein particle and the interface reflectivity are also about the same.

As a result, the reflectivity reference sample 303 can be measured under the same condition as the laser power condition for measuring the size distribution of the protein particles, and the sensitivity coefficient K under this condition can be acquired. Although a difference in laser power conditions may cause a difference in sensitivity coefficient, according to the method of the present invention, this possibility is eliminated, and more accurate sensitivity correction is possible, so that the particle size can be accurately measured.

The reflectivity reference sample 303 desirably has a small optical temporal change and can be used for a long period of time.

As a substance in contact with the transparent flat plate 402 of the reflectivity reference sample 303, a sample is prepared in which a refractive index is changed using another ultraviolet curing resin instead of the ultraviolet curing resin (DVD310) manufactured by Nippon Kayaku Co., Ltd. Measurement for obtaining the sensitivity coefficient K is performed for each, and the laser power conditions are as follows.

n: laser power condition
1.41: lower power than protein particle sample measurement
1.43: power substantially equal to protein particle sample measurement
1.48: power substantially equal to protein particle sample measurement
1.50: power substantially equal to protein particle sample measurement
1.52: higher power than protein particle sample measurement

From these results, the refractive index of the substance in contact with the transparent flat plate 402 of the reflectivity reference sample 303 is preferably 1.43 or more and 1.50 or less.

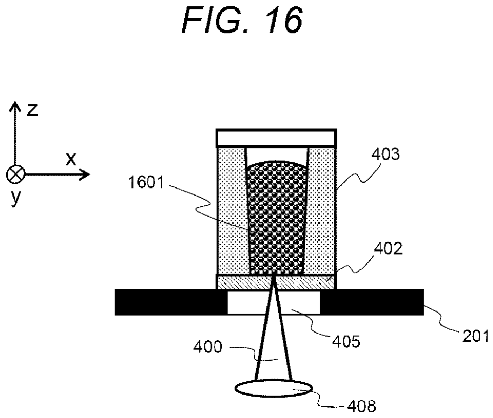

FIG. 16 illustrates another configuration example of the reflectivity reference sample 303. In the above embodiment, an ultraviolet curable resin (DVD310) manufactured by Nippon Kayaku Co., Ltd. or the like is used as a substance in contact with the transparent flat plate 402. A liquid resin (silicone oil for a microscope or the like) can be used instead. In FIG. 16, reference numeral 1601 denotes the liquid resin. In this case, sealing is performed with a sealing tape or the like so that the liquid does not leak.

(How to Use Reflectivity Reference Sample)

In the case of measuring the plurality of actual samples, the reflectivity reference sample 303 may be measured only once at the start of measurement, or the reflectivity reference sample 303 may be measured for each measurement in the plurality of actual sample measurements.

In a case where the measurement time required for measuring the actual sample is relatively short, the environmental temperature and the temperature change of the laser during the measurement of the actual sample are relatively small. Therefore, it is only necessary to measure the reflectivity reference sample once at the start of the measurement to perform the sensitivity correction. This can shorten the entire time required for the measurement.

On the other hand, in a case where the measurement time required for measuring the actual sample is relatively long, there is a possibility that the environmental temperature or the temperature of the laser changes during the measurement. Therefore, it is possible to perform more accurate measurement by measuring the reflectivity reference sample for each measurement in a plurality of actual sample measurements and correcting again the sensitivity each time. At this time, the reflectivity reference sample may be measured not for each measurement but for each measurement of a certain number of actual samples, and the sensitivity correction may be corrected again each time.

The length of the measurement time of the actual sample can be determined by the measurer. In this case, the measurement time when similar samples were measured in the past may be referred to. However, in the case of measuring a plurality of unknown samples, it is preferable to perform sensitivity correction again each time.

<Modifications of Present Invention>

In addition, the present invention is not limited to the embodiments mentioned above, and various modifications are included. For example, the above embodiments have been described in detail for easy understanding of the present invention, and is not necessarily limited to those having all the configurations described. Further, a part of the configuration of one embodiment can be replaced with the configuration of another embodiment, and further, the configuration of one embodiment can be added to the configuration of another embodiment. In addition, it is possible to add, delete, and replace other configurations for a part of the configuration of each embodiment.

In the above embodiments, the reflectivity reference sample 303 can be configured as a constituent element of the particle measurement device, or can be configured as, for example, a separate member detachable from the particle measurement device.

In the above embodiments, the objective lens 108 and the drive mechanism 109 have a role as an irradiation unit that condenses and irradiates the signal light with respect to the sample, and the detection optical system 112 has a role as a detection unit that detects the interference signal generated by the interference between the signal light and the interference light.

Reference Signs List

100 light source
101 laser driver
108 objective lens
109 drive mechanism
112 detection optical system
124 signal processing unit
200 sample container
201 metal plate
202 transparent window
303 reflectivity reference sample
402 transparent flat plate
404 substance
1201 ID information

**Claims**

1.  A particle measurement device that measures a size of a particle contained in a liquid sample, the particle measurement device comprising:

    a light source that emits light;
    a branching unit that branches light from the light source into signal light and reference light;
    an irradiation unit that condenses the signal light and irradiates the sample with the signal light;
    a detection unit that detects an interference signal obtained by causing reflected light from the particle and the reference light to interfere with each other; and

a processing unit that measures a size of the sample by using the interference signal detected by the detection unit and calibrates the size by using a measurement result of a reference sample,

wherein the reference sample includes a reference sample window having the same material quality and thickness as a sample container window included in a sample container that accommodates the sample,

wherein the reference sample includes, at a position in contact with the reference sample window, a substance having a reflectivity in which a difference from a reflectivity of the sample is within an allowable range,

wherein the processing unit acquires a result of measuring the reflectivity of the substance at a first time point as a first reflectivity,

wherein the processing unit acquires a result of measuring the reflectivity of the substance at a second time point which is closer to a time point of measuring the sample than the first time point as a second reflectivity, and

wherein the processing unit calibrates the size of the sample using the first reflectivity and the second reflectivity.

2. The particle measurement device according to claim 1,

wherein the irradiation unit irradiates the light so that a focal position of the light is set at a boundary surface between the reference sample window and the substance, and

wherein the processing unit acquires the first reflectivity and the second reflectivity using the interference signal obtained from the boundary surface between the reference sample window and the substance.

3. The particle measurement device according to claim 1,

wherein the processing unit calculates a ratio of the second reflectivity to the first reflectivity as a sensitivity coefficient, and

wherein the processing unit calibrates the size of the sample by multiplying the size of the sample measured using the interference signal by the sensitivity coefficient.

4. The particle measurement device according to claim 3, wherein when the sensitivity coefficient is out of a predetermined range, the processing unit outputs a signal indicating that the sensitivity coefficient is out of the predetermined range.

5. The particle measurement device according to claim 1,

wherein the light source emits the light having the same emission power both when measuring the size of the sample and when measuring the reflectivity of the substance, and

wherein the processing unit acquires the size of the sample, the first reflectivity, and the second reflectivity using the interference signal obtained by the light having the same emission power.

6. The particle measurement device according to claim 1,

wherein the particle measurement device further includes a plate on which the sample container is placed and a frame covering the sample container placed on the plate, and

wherein the reference sample is configured to be fixable relative to the plate at a position outside the frame on the plate.

7. The particle measurement device according to claim 2,

wherein the irradiation unit irradiates the light so that a focal position of the light is set at a boundary surface between the sample container window and the liquid,

wherein the processing unit acquires a magnitude of the interference signal obtained from a boundary surface between the sample container window and the liquid as a sample interference signal value,

wherein the processing unit acquires a magnitude of the interference signal obtained from the boundary surface between the reference sample window and the substance as a reference sample interference signal value, and

wherein the processing unit calculates a refractive index of the liquid by using the sample interference signal value and the reference sample interference signal value.

8. The particle measurement device according to claim 1, wherein the substance is an ultraviolet curable resin.

9. The particle measurement device according to claim 1,

wherein the substance has at least one of:

> a multilayer structure of one dielectric film or two or more kinds of dielectric films,
> a structure in which a metal film is laminated on a dielectric film.

10. The particle measurement device according to claim 1, comprising the reference sample.

11. The particle measurement device according to claim 10,
    wherein the substance has a refractive index of $1.47\pm0.03$.

12. A particle measurement method of measuring a size of a particle contained in a liquid sample, the particle measurement method comprising:

> emitting light from a light source;
> branching light from the light source into signal light and reference light;
> condensing the signal light and irradiating the sample with the signal light;
> detecting an interference signal obtained by causing reflected light from the particle and the reference light to interfere with each other;
> measuring a size of the sample by using the detected interference signal; and
> calibrating the size by using a reference sample,
> wherein the reference sample includes a reference sample window having the same material quality and thickness as a sample container window included in a sample container that accommodates the sample,
> wherein the reference sample includes, at a position in contact with the reference sample window, a substance having a reflectivity in which a difference from a reflectivity of the sample is within an allowable range,
> wherein the calibrating the size further includes acquiring, as a first reflectivity, a result of measuring the reflectivity of the substance at a first time point,
> wherein the calibrating the size further includes acquiring, as a second reflectivity, a result of measuring the reflectivity of the substance at a second time point which is closer to a time point of measuring the sample than the first time point, and
> wherein the calibrating the size further includes calibrating the size of the sample using the first reflectivity and the second reflectivity.

13. A reference sample used for calibrating a measurement result of a size in a particle measurement device that measures the size of a particle included in a liquid sample by irradiating the liquid sample with light,

> wherein the reference sample is configured to be detachable from a sample holder that is formed by a base plate included in the particle measurement device and that holds a sample container that houses the sample,
> wherein the reference sample includes a reference sample window having the same material quality and thickness as a sample container window included in the sample container,
> wherein the reference sample includes, at a position in contact with the reference sample window, a substance having a reflectivity in which a difference from the reflectivity of the sample is within an allowable range,
> wherein the reference sample window is formed on a transparent flat plate disposed at a bottom of the reference sample, and
> wherein a thickness of the transparent flat plate is in a range of $175\pm70$ $\mu$m, and a refractive index of the transparent flat plate is in a range of $1.520\pm0.22$.

14. The reference sample according to claim 13,
    wherein a shape pattern representing ID information for identifying the reference sample is formed on any surface of the transparent flat plate.

15. The reference sample according to claim 13,
    wherein the substance has a refractive index of $1.47\pm0.03$.

# FIG. 1

(SMALL PARTICLE)    (LARGE PARTICLE)

PARTICLE

PARTICLE

SPOT SIZE

FOCUS

FOCUS

LENS

(SIGNAL LEVEL DISTRIBUTION)

NUMBER OF DETECTED PARTICLES

SMALL PARTICLE

LARGE PARTICLE

80

60

40

20

0

0.2    1

SIGNAL AT FOCUS

# FIG. 2

## FIG. 3A

304

303

302

201

## FIG. 3B

303

304

201

302

# FIG. 4

# FIG. 5A

MIRROR POSITION WHERE OPTICAL PATH LENGTH OF
SIGNAL LIGHT MATCHES WITH OPTICAL PATH LENGTH
OF REFERENCE LIGHT (R0)

$A_0$

SIGNAL

0    200    400    600

REFERENCE MIRROR POSITION (μm)

# FIG. 5B

MIRROR POSITION WHERE OPTICAL PATH LENGTH OF
SIGNAL LIGHT MATCHES WITH OPTICAL PATH LENGTH
OF REFERENCE LIGHT (R0)

$A_0$

$A_1$

SIGNAL

0    200    400    600

REFERENCE MIRROR POSITION (μm)

# FIG. 6

```
                    ┌─────────────┐
                    │    Start    │
                    └─────────────┘
                           │
                           ▼
    ┌─────────────────────────────────────────────────────┐
    │   MOVE TO REFLECTIVITY REFERENCE SAMPLE POSITION     │
    └─────────────────────────────────────────────────────┘
                           │
                           ▼
    ┌─────────────────────────────────────────────────────┐
    │  CAUSE LIGHT TO BE EMITTED AT STANDARD POWER P₀      │
    └─────────────────────────────────────────────────────┘
                           │
                           ▼
    ┌─────────────────────────────────────────────────────┐
    │                  Z0=Z00, R=R00                      │
    └─────────────────────────────────────────────────────┘
                           │
                           ▼
    ┌─────────────────────────────────────────────────────┐
    │       MEASURE SIGNAL BY SCANNING Z POSITION          │
    │            AROUND TRANSPARENT WINDOW                  │
    └─────────────────────────────────────────────────────┘
                           │
                           ▼
    ┌─────────────────────────────────────────────────────┐
    │            DETERMINE BOUNDARY POSITION Z0            │
    └─────────────────────────────────────────────────────┘
                           │
                           ▼
    ┌─────────────────────────────────────────────────────┐
    │     MEASURE SIGNAL BY SCANNING R POSITION AT Z=Z0   │
    └─────────────────────────────────────────────────────┘
                           │
                           ▼
    ┌─────────────────────────────────────────────────────┐
    │      DETERMINE MIRROR POSITION R0 AT WHICH           │
    │   OPTICAL PATH LENGTHS MATCH WITH EACH OTHER         │
    └─────────────────────────────────────────────────────┘
                           │
                           ▼
    ┌─────────────────────────────────────────────────────┐
    │    ACQUIRE REFERENCE SIGNAL LEVEL A₀ AND             │
    │      STORE IN INFORMATION HOLDING UNIT               │
    └─────────────────────────────────────────────────────┘
                           │
                           ▼
                    ┌─────────────┐
                    │     End     │
                    └─────────────┘
```

- MOVE TO REFLECTIVITY REFERENCE SAMPLE POSITION
- CAUSE LIGHT TO BE EMITTED AT STANDARD POWER $P_0$
- Z0=Z00, R=R00
- MEASURE SIGNAL BY SCANNING Z POSITION AROUND TRANSPARENT WINDOW
- DETERMINE BOUNDARY POSITION Z0
- MEASURE SIGNAL BY SCANNING R POSITION AT Z=Z0
- DETERMINE MIRROR POSITION R0 AT WHICH OPTICAL PATH LENGTHS MATCH WITH EACH OTHER
- ACQUIRE REFERENCE SIGNAL LEVEL $A_0$ AND STORE IN INFORMATION HOLDING UNIT

# FIG. 7

```
                    ┌──────────┐
                    │  Start   │
                    └──────────┘
                          │
                          ▼
    ┌────────────────────────────────────────────────────┐
    │   MOVE TO REFLECTIVITY REFERENCE SAMPLE POSITION     │
    └────────────────────────────────────────────────────┘
                          │
                          ▼
    ┌────────────────────────────────────────────────────┐
    │   CAUSE LIGHT TO BE EMITTED AT STANDARD POWER $P_0$  │
    └────────────────────────────────────────────────────┘
                          │
                          ▼
    ┌────────────────────────────────────────────────────┐
    │              Z0=Z00, R=R00                           │
    └────────────────────────────────────────────────────┘
                          │
                          ▼
    ┌────────────────────────────────────────────────────┐
    │        MEASURE SIGNAL BY SCANNING Z POSITION         │
    │              AROUND TRANSPARENT WINDOW               │
    └────────────────────────────────────────────────────┘
                          │
                          ▼
    ┌────────────────────────────────────────────────────┐
    │           DETERMINE BOUNDARY POSITION Z0             │
    └────────────────────────────────────────────────────┘
                          │
                          ▼
    ┌────────────────────────────────────────────────────┐
    │     MEASURE SIGNAL BY SCANNING R POSITION AT Z=Z0    │
    └────────────────────────────────────────────────────┘
                          │
                          ▼
    ┌────────────────────────────────────────────────────┐
    │        DETERMINE MIRROR POSITION R0 AT WHICH         │
    │    OPTICAL PATH LENGTHS MATCH WITH EACH OTHER        │
    └────────────────────────────────────────────────────┘
                          │
                          ▼
    ┌────────────────────────────────────────────────────┐
    │     ACQUIRE REFERENCE SIGNAL LEVEL $A_1$ AND         │
    │       STORE IN INFORMATION HOLDING UNIT             │
    └────────────────────────────────────────────────────┘
                          │
                          ▼
    ┌────────────────────────────────────────────────────┐
    │    ACQUIRE SENSITIVITY $K$ BASED ON EQUATION 3       │
    └────────────────────────────────────────────────────┘
                          │
                          ▼
                    ┌──────────┐
                    │   End    │
                    └──────────┘
```

# FIG. 8

```
                    ┌─────────┐
                    │  Start  │
                    └─────────┘
                         │
                         ▼
┌──────────────────────────────────────────────────────┐
│   MOVE TO REFLECTIVITY REFERENCE SAMPLE POSITION       │
└──────────────────────────────────────────────────────┘
                         │
                         ▼
┌──────────────────────────────────────────────────────┐
│   CAUSE LIGHT TO BE EMITTED AT STANDARD POWER $P_0$    │
└──────────────────────────────────────────────────────┘
                         │
                         ▼
┌──────────────────────────────────────────────────────┐
│                  Z0=Z00, R=R00                         │
└──────────────────────────────────────────────────────┘
                         │
                         ▼
┌──────────────────────────────────────────────────────┐
│        MEASURE SIGNAL BY SCANNING Z POSITION           │
│           AROUND TRANSPARENT WINDOW                     │
└──────────────────────────────────────────────────────┘
                         │
                         ▼
┌──────────────────────────────────────────────────────┐
│           DETERMINE BOUNDARY POSITION Z0               │
└──────────────────────────────────────────────────────┘
                         │
                         ▼
┌──────────────────────────────────────────────────────┐
│    MEASURE SIGNAL BY SCANNING R POSITION AT Z=Z0       │
└──────────────────────────────────────────────────────┘
                         │
                         ▼
┌──────────────────────────────────────────────────────┐
│       DETERMINE MIRROR POSITION R0 AT WHICH            │
│   OPTICAL PATH LENGTHS MATCH WITH EACH OTHER           │
└──────────────────────────────────────────────────────┘
                         │
                         ▼
┌──────────────────────────────────────────────────────┐
│     ACQUIRE REFERENCE SIGNAL LEVEL $A_1$ AND          │
│       STORE IN INFORMATION HOLDING UNIT                │
└──────────────────────────────────────────────────────┘
                         │
                         ▼
┌──────────────────────────────────────────────────────┐
│     ACQUIRE SENSITIVITY $K$ BASED ON EQUATION 3        │
└──────────────────────────────────────────────────────┘
                         │
                         ▼
```

DETERMINE THAT
SENSITIVITY $K$ IS NORMAL — No → PERFORM SENSITIVITY ABNORMALITY PROCESSING

Yes ↓

End

# FIG. 9

Start

→ MOVE TO REFLECTIVITY STANDARD
SAMPLE POSITION

→ CAUSE LIGHT TO BE EMITTED
AT STANDARD POWER $P_0$

→ Z0=Z00, R=R00

→ MEASURE SIGNAL BY SCANNING Z POSITION
AROUND TRANSPARENT WINDOW

→ DETERMINE BOUNDARY POSITION Z0

→ MEASURE SIGNAL
BY SCANNING R POSITION AT Z=Z0

→ DETERMINE MIRROR POSITION R0 AT WHICH
OPTICAL PATH LENGTHS MATCH WITH EACH OTHER

→ ACQUIRE REFERENCE SIGNAL LEVEL $A_1$ AND
STORE INFORMATION HOLDING UNIT

→ ACQUIRE SENSITIVITY $K$ BASED
ON EQUATION 3

MOVE TO MEASUREMENT SAMPLE POSITION

→ Z0=Z00, R=R00

→ MEASURE SIGNAL BY SCANNING Z POSITION
AROUND TRANSPARENT WINDOW

→ DETERMINE BOUNDARY POSITION Z0

→ MEASURE SIGNAL
BY SCANNING R POSITION AT Z=Z0

→ DETERMINE MIRROR POSITION R0 AT WHICH
OPTICAL PATH LENGTHS MATCH WITH EACH OTHER

→ MOVE FROM BOUNDARY POSITION TO
PREDETERMINED MEASUREMENT POSITION Z

→ DETECT XYZ INFORMATION UNDER
PREDETERMINED SCANNING CONDITION,
AND PERFORM SIGNAL PROCESSING

→ PERFORM SIZE CALIBRATION OF
SAMPLE BASED ON SENSITIVITY $K$

→ DISPLAY SIZE AND
DENSITY DISTRIBUTION OF SAMPLE

→ End

# FIG. 10

## FIG. 11A

## FIG. 11B

## FIG. 12

# FIG. 13

```
                    ┌─────────┐
                    │  Start  │
                    └─────────┘
                         │
                         ▼
  ┌─────────────────────────────────────────────────┐
  │  MOVE TO REFLECTIVITY REFERENCE SAMPLE POSITION  │
  └─────────────────────────────────────────────────┘
                         │
                         ▼
  ┌─────────────────────────────────────────────────┐
  │  CAUSE LIGHT TO BE EMITTED AT STANDARD POWER P₀  │
  └─────────────────────────────────────────────────┘
                         │
                         ▼
  ┌─────────────────────────────────────────────────┐
  │           REPRODUCE ID INFORMATION              │
  └─────────────────────────────────────────────────┘
                         │
                         ▼
  ┌─────────────────────────────────────────────────┐
  │              Z0=Z00, R=R00                      │
  └─────────────────────────────────────────────────┘
                         │
                         ▼
  ┌─────────────────────────────────────────────────┐
  │     MEASURE SIGNAL BY SCANNING Z POSITION       │
  │          AROUND TRANSPARENT WINDOW              │
  └─────────────────────────────────────────────────┘
                         │
                         ▼
  ┌─────────────────────────────────────────────────┐
  │          DETERMINE BOUNDARY POSITION Z0         │
  └─────────────────────────────────────────────────┘
                         │
                         ▼
  ┌─────────────────────────────────────────────────┐
  │    MEASURE SIGNAL BY SCANNING R POSITION AT Z=Z0 │
  └─────────────────────────────────────────────────┘
                         │
                         ▼
  ┌─────────────────────────────────────────────────┐
  │      DETERMINE MIRROR POSITION R0 AT WHICH      │
  │  OPTICAL PATH LENGTHS MATCH WITH EACH OTHER     │
  └─────────────────────────────────────────────────┘
                         │
                         ▼
  ┌─────────────────────────────────────────────────┐
  │    ACQUIRE REFERENCE SIGNAL LEVEL A₁ AND        │
  │     STORE IN INFORMATION HOLDING UNIT           │
  └─────────────────────────────────────────────────┘
                         │
                         ▼
  ┌─────────────────────────────────────────────────┐
  │   ACQUIRE SENSITIVITY K BASED ON EQUATION 3     │
  └─────────────────────────────────────────────────┘
                         │
                         ▼
                    ┌─────────┐
                    │   End   │
                    └─────────┘
```

The flowchart contains the following steps:

- MOVE TO REFLECTIVITY REFERENCE SAMPLE POSITION
- CAUSE LIGHT TO BE EMITTED AT STANDARD POWER $P_0$
- REPRODUCE ID INFORMATION
- Z0=Z00, R=R00
- MEASURE SIGNAL BY SCANNING Z POSITION AROUND TRANSPARENT WINDOW
- DETERMINE BOUNDARY POSITION Z0
- MEASURE SIGNAL BY SCANNING R POSITION AT Z=Z0
- DETERMINE MIRROR POSITION R0 AT WHICH OPTICAL PATH LENGTHS MATCH WITH EACH OTHER
- ACQUIRE REFERENCE SIGNAL LEVEL $A_1$ AND STORE IN INFORMATION HOLDING UNIT
- ACQUIRE SENSITIVITY $K$ BASED ON EQUATION 3

## FIG. 14A

## FIG. 14B

## FIG. 15A

## FIG. 15B

FIG. 16

## INTERNATIONAL SEARCH REPORT

| International application No. |
| --- |
| **PCT/JP2023/040081** |

**A. CLASSIFICATION OF SUBJECT MATTER**

***G01B 11/08***(2006.01)i

FI: G01B11/08 G

According to International Patent Classification (IPC) or to both national classification and IPC

**B. FIELDS SEARCHED**

Minimum documentation searched (classification system followed by classification symbols)

G01B11/08; G01N15/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2017-102032 A (HITACHI-LG DATA STORAGE INC.) 08 June 2017 (2017-06-08) entire text, all drawings | 1-15 |
| A | WO 2020/144754 A1 (HITACHI HIGH-TECH CORPORATION) 16 July 2020 (2020-07-16) entire text, all drawings | 1-15 |
| A | JP 2009-300182 A (NIPPON SOKEN, INC.) 24 December 2009 (2009-12-24) entire text, all drawings | 1-15 |
| A | JP 2001-165846 A (NIKKISO CO., LTD.) 22 June 2001 (2001-06-22) entire text, all drawings | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 December 2023** | **26 December 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
**Information on patent family members**

International application No.

**PCT/JP2023/040081**

| Patent document cited in search report | | | Publication date (day/month/year) | Patent family member(s) | | | Publication date (day/month/year) |
|---|---|---|---|---|---|---|---|
| JP | 2017-102032 | A | 08 June 2017 | US | 2017/0160185 | A1 | |
| | | | | entire text, all drawings | | | |
| WO | 2020/144754 | A1 | 16 July 2020 | US | 2022/0065766 | A1 | |
| | | | | entire text, all drawings | | | |
| | | | | EP | 3910315 | A1 | |
| | | | | CN | 113227759 | A | |
| JP | 2009-300182 | A | 24 December 2009 | (Family: none) | | | |
| JP | 2001-165846 | A | 22 June 2001 | (Family: none) | | | |

Form PCT/ISA/210 (patent family annex) (January 2015)

**REFERENCES CITED IN THE DESCRIPTION**

**Patent documents cited in the description**

- JP 2017102032 A
- WO 2020144754 A